# EUROPEAN PATENT APPLICATION

(11) **EP 4 481 664 A1**
(43) Date of publication of application: **25.12.2024**
(21) Application number: 23803771.7
(22) Date of filing: 08.05.2023
(51) Int. Cl.: G06Q 30/06, G06Q 20/40, G06Q 10/08, G08B 21/18

(54) **BATTERY RENTAL SYSTEM, BATTERY STATION MANAGEMENT SERVER, AND OPERATING METHOD THEREFOR**

(30) Priority: 12.05.2022 KR 20220058639
(71) Applicant: LG Energy Solution, Ltd., Seoul 07335 (KR)
(72) Inventor: PARK, Heon Il, Daejeon 34122 (KR)
(74) Representative: Plasseraud IP
(86) International application number: PCT/KR2023/006190
(87) International publication number: WO 2023/219348

(57) **Abstract**

A battery station management server according to an embodiment disclosed herein includes a communication unit configured to receive a battery rental request for a battery managed by a battery station of a user, an authentication unit configured to determine whether to approve rental for the battery rental request, and an information management unit configured to store battery information about the battery and user information about a user by using a smart contract and manage battery rental information comprising the battery information and the user information by using the smart contract when approving the battery rental request.

## Description

### [TECHNICAL FIELD]

### CROSS-REFERENCE TO RELATED APPLICATION

This application claims priority to and the benefit of Korean Patent Application No. 10-2022-0058639 filed in the Korean Intellectual Property Office on May 12, 2022, the entire contents of which are incorporated herein by reference.

### TECHNICAL FIELD

Embodiments disclosed herein relate to a battery rental system, a battery station management server, and an operating method thereof.

### [BACKGROUND ART]

A battery station has one or more batteries. A battery user may rent batteries owned by the battery station and return the batteries having been used to the battery station. Rental records for batteries managed by the battery station are managed by a management server connected through a wired or wireless network. As the field of battery usage is expanding to cell phone auxiliary batteries, electric scooter batteries, electric bicycle batteries, etc., the battery rental business field using battery stations is also expanding.

Batteries owned by a battery station are evolving toward standardization in terms of capacity, size, etc. As batteries become standardized, a user may rent and return batteries at battery stations of different companies. For example, a user may rent a battery from a battery station of a company A and return the battery to a battery station of a company B. As rental and return of batteries by users are repeated, a battery station of an individual company may have batteries of the company and batteries of other companies.

### [DISCLOSURE]

### [TECHNICAL PROBLEM]

Although a battery station records battery rental data through a wired or wireless network, there is a high possibility of a battery loss due to a data loss in specific details, needing to quickly identify the battery loss.

As battery stations of several companies share batteries, the batteries are mixed, increasing a probability of a battery loss.

In the background art and the technical problems, the matters described are merely for facilitating understanding of the background of the present invention, and should not be accepted as acknowledging that they correspond to the prior art known to those of ordinary skill in the art.

### [TECHNICAL SOLUTION]

A battery station management server according to an embodiment disclosed herein includes a communication unit configured to receive a battery rental request for a battery managed by a battery station of a user, an authentication unit configured to determine whether to approve the battery rental request for a rental of the battery, and an information management unit configured to store battery information about the battery and user information about a user by using a smart contract and manage battery rental information including the battery information and the user information by using the smart contract when approving the battery rental request.

According to an embodiment, the battery information may include battery identification information and battery manufacturing company information, and the user information may include user identification information.

According to an embodiment, the authentication unit may be further configured to generate authentication information in response to the battery rental request, and determine whether to approve rental based on the user information and the authentication information.

According to an embodiment, the authentication unit may be further configured to determine whether to approve the battery rental request based on a form validation.

According to an embodiment, the communication unit may be further configured to further receive a battery return request of the user, and the information management unit may be further configured to update the battery rental information by using the smart contract upon receiving the return request.

According to an embodiment, the information management unit may be further configured to determine whether the battery is lost, by querying the battery rental information.

According to an embodiment, when the information management unit determines that the battery is lost, the communication unit may be further configured to transmit battery loss information to an external electronic device.

A battery rental system according to an embodiment disclosed herein includes a battery station configured to manage at least one battery, a user terminal configured to generate a battery rental request for renting the battery from the battery station, and a battery station management server configured to determine whether to approve the battery rental request, store battery information about the battery managed by the battery station and user information about a user by using a smart contract and manage battery rental information including the battery information and the user information by using the smart contract when approving the battery rental request.

According to an embodiment, the battery information may include battery identification information and battery manufacturing company information, and the user information may include identification information of the user terminal.

According to an embodiment, the user terminal may be further configured to transmit a battery return request to the battery station management server, and the battery station management server may be further configured to update the battery rental information by using the smart contract upon receiving the return request.

According to an embodiment, the battery station management server may be further configured to determine whether the battery is lost, by querying the battery rental information.

According to an embodiment, the battery station management server may be further configured to transmit battery loss information to an external electronic device, upon determining that the battery is lost.

An operating method of a battery state management server according to an embodiment disclosed herein includes storing battery information about a battery and user information about a user by using a smart contract, receiving a battery rental request of a user, determining whether to approve the battery rental request, and managing battery rental information including the battery information by using the smart contract, when approving the battery rental request.

According to an embodiment, the battery information may include battery identification information and battery manufacturing company information, and the user information may include user identification information.

According to an embodiment, the determining of whether to approve rental for the battery rental request may be performed based on a form validation.

According to an embodiment, the operating method may further include generating authentication information in response to the battery rental request, and the determining of whether to approve the battery rental may be performed based on the user information and the authentication information.

According to an embodiment, the operating method may further include receiving a battery return request of the user, and updating the battery rental information by using the smart contract upon receiving the battery return request.

According to an embodiment, the operating method may further include determining whether the battery is lost by querying the battery rental information.

According to an embodiment, the operating method may further include transmitting battery loss information to an external electronic device upon determining that the battery is lost.

### [ADVANTAGEOUS EFFECTS]

With the battery rental system, the battery station management server, and the operating method thereof according to the disclosure of the present document, battery stations sharing a standardized battery may share information about battery rental by using the same smart contract.

With the battery rental system, the battery station management server, and the operating method thereof according to the disclosure of the present document, by sharing battery rental information using a smart contract, whether a battery is rented or lost may be easily recognized.

With the battery rental system, the battery station management server, and the operating method thereof according to the disclosure of the present document, as the field of the battery rental business expands, information about battery rental is shared among several companies, thereby reducing a possibility of a battery loss caused by a data loss.

The effects of the battery rental system, the battery station management server, and the operating method thereof according to the disclosure of the present document are not limited to the effects mentioned above, and other effects not mentioned will be clearly understood by those of ordinary skill in the art according to the disclosure of the present document.

### [DESCRIPTION OF DRAWINGS]

FIG. 1 is a block diagram of a battery station management server according to an embodiment disclosed herein.
FIG. 2 shows a battery rental system according to an embodiment disclosed herein.
FIG. 3 shows a network between a plurality of battery station management servers according to an embodiment disclosed herein.
FIGS. 4 through 7 are views showing an operating method of a battery station management server, according to an embodiment disclosed herein.
FIG. 8 is an operating flowchart of a battery rental system according to an embodiment disclosed herein.

With regard to the description of the drawings, similar reference numerals may be used to refer to similar or related components.

### [MODE FOR INVENTION]

Hereinafter, various embodiments of the present disclosure will be disclosed with reference to the accompanying drawings. However, the description is not intended to limit the present disclosure to particular embodiments, and it should be construed as including various modifications, equivalents, and/or alternatives according to the embodiments of the present disclosure.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise.

As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. Such terms as "1^{st}", "2^{nd}," "first", "second", "A", "B", "(a)", or "(b)" may be used to simply distinguish a corresponding component from another, and does not limit the components in other aspect (e.g., importance or order), unless mentioned otherwise.

Herein, it is to be understood that when an element (e.g., a first element) is referred to, with or without the term "operatively" or "communicatively", as "connected with", "coupled with", or "linked with", or "coupled to" or "connected to" to another element (e.g., a second element), it means that the element may be connected with the other element directly (e.g., wiredly), wirelessly, or via a third element.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store, or between two user devices directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

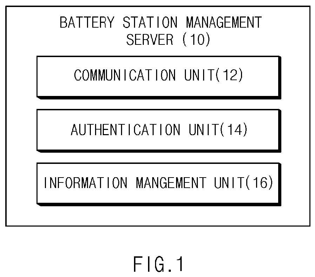

FIG. 1 is a block diagram of a battery station management server according to an embodiment disclosed herein.

Referring to FIG. 1, a battery station management server 10 may include a communication unit 12, an authentication unit 14, and an information management unit 16.

The communication unit 12 may perform communication with an external electronic device. The communication unit 12 may receive a signal from or transmit a signal to the external electronic device. For example, the external electronic device may include a user terminal or a battery station.

The communication unit 12 may receive a battery rental request. According to an embodiment, the battery rental request may mean a battery rental request of a user for a battery managed by a battery station. Herein, the battery station may have at least one battery, and the communication unit 12 may receive the battery rental request for a battery owned by the battery station.

The communication unit 12 may receive a battery return request. According to an embodiment, the battery return request may mean a battery return request for a battery rented by the user from the battery station or another battery station. The battery station may manage the returned battery.

The authentication unit 14 may determine whether to approve the rental for the battery rental request. The authentication unit 14 may perform user authentication to determine whether to approve the rental in response to the battery rental request. According to an embodiment, user authentication may mean authentication of whether the user having requested battery rental is a registered user. According to an embodiment, the authentication unit 14 may determine whether to approve the rental based on form validation.

The authentication unit 14 may generate authentication information for the battery rental request. The authentication unit 14 may generate a key pair of a public key infrastructure (PKI) and generate a lender identification (ID). The authentication information may include a public key and/or a lender ID. According to an embodiment, the authentication unit 14 may verify a signature with the public key.

The authentication unit 14 may approve rental or non-rental based on user information and the authentication information. According to an embodiment, the authentication unit 14 may perform user authentication and battery rental approval to approve rental or non-rental. According to an embodiment, the user authentication may be performed based on the user information. Herein, the user information may be stored in the information management unit 16. According to an embodiment, the authentication unit 14 may determine whether information about the user having requested battery rental is included in the user information to perform the user authentication. According to an embodiment, when the user information is stored in the form of a universal unique identifier (UUID), the authentication unit 14 may perform the user authentication by verifying the universal unique identifier. According to an embodiment, approval of battery rental may be performed based on the authentication information. In this case, the authentication information may include a public key, and the authentication unit 14 may verify a signature with the public key.

The information management unit 16 may store a smart contract. The smart contract may include a smart contract for managing battery rental information.

The information management unit 16 may store battery information and the user information by using the smart contract. The battery information may refer to information about a battery managed by a battery station, and the user information may refer to information about a user renting a battery from a battery station or returning a battery to a battery station. According to an embodiment, the information management unit 16 may sign and store the battery information. According to an embodiment, the information management unit 16 may sign and store the battery information and a lender ID together.

According to an embodiment, the battery information may include battery identification information and battery manufacturing company information, and the user information may include user identification information. The battery information and the user information may correspond to encrypted information. According to an embodiment, the battery information and the user information may be encrypted unidirectionally. The information management unit 16 may convert the battery information and the user information into a UUID form and store the same. According to an embodiment, the information management unit 16 may store the battery information and the user information in the form of a UUID by using the smart contract.

The information management unit 16 may store authentication information generated by the authentication unit 14 by using the smart contract. The information management unit 16 may store the public key and/or the lender ID generated by the authentication unit 14.

The information management unit 16 may store the battery rental information by using the smart contract when the authentication unit 14 approves battery rental. According to an embodiment, the battery rental information may include information encrypted using the smart contract. According to an embodiment, the battery rental information may include battery rental state information. According to an embodiment, the battery rental state information may be indicated by a flag. According to an embodiment, when the authentication unit 14 approves battery rental, the information management unit 16 may indicate and store the flag indicating the battery rental state information as "T", "True", or "1". The battery rental information may include the battery information and the user information. The battery information included in the battery rental information may refer to a battery to be rented. The user information included in the battery rental information may refer to information about a subject renting the battery.

The information management unit 16 may update the battery rental information by using the smart contract. According to an embodiment, the information management unit 16 may update the battery rental information in response to a battery return request. The information management unit 16 may manage information about whether the battery is normally returned, by updating the battery rental information in response to the battery return request. According to an embodiment, by updating the battery rental information in response to the battery return request, the information management unit 16 may remove the flag indicating the battery rental state information or changing an indication into "F", "False", or "0".

The information management unit 16 may determine whether a battery is lost. The information management unit 16 may query the battery rental information to determine whether the battery is lost. The information management unit 16 may determine whether the battery is lost, by querying the battery rental information upon elapse of a preset period. The information management unit 16 may determine whether the battery is lost, based on the battery rental state information included in the battery rental information. According to an embodiment, the information management unit 16 may query the battery rental information upon elapse of a preset battery rental period or according to a preset cycle. The information management unit 16 may set a cycle based on a battery rental period.

According to an embodiment, the information management unit 16 may query the battery rental information and determine that the battery is lost when the battery rental state information is not removed or not changed. According to an embodiment, the information management unit 16 may query the battery rental information and determine that the battery is lost when the flag indicating the battery state information is "T", "True", or "1" in spite of the elapse of the battery rental period.

According to an embodiment, the information management unit 16 may update the battery rental information when determining that the battery is lost. The battery rental information may include information about a battery loss. According to an embodiment, the information management unit 16 may identify information about a user having lost the battery, by using the smart contract, when determining that the battery is lost. According to an embodiment, the information management unit 16 may reproduce encryption for battery information of the lost battery and user information stored in the information management unit 16, by using the smart contract. Herein, the information management unit 16 may identify as the information about the user having lost the battery, user information used when encrypted information matches the battery rental information.

When the information management unit 16 determines that the battery is lost, the communication unit 12 may transmit battery loss information to an external electronic device. According to an embodiment, the battery loss information may include information about the user having lost the battery. The external electronic device may include a user terminal, a battery station, or a manager terminal. The battery loss information may include a battery loss notification, a battery return date elapse notification, or battery loss-identified date information. According to an embodiment, the communication unit 12 may transmit the battery loss notification to the manager terminal, the battery loss-identified date information to the battery station, or the battery return date elapse notification to the user terminal.

The battery station management sever 10 may manage the battery rental information corresponding to battery rental and/or return. According to an embodiment, the battery station management server 10 may manage the battery rental information by using the smart contract, such that when there are a plurality of battery station management servers that store a smart contract of the same content, the plurality of battery station management servers may manage information about battery rental, return, or loss together.

The battery station management server 10 may easily identify a battery loss by querying the battery rental information to determine whether the battery is lost. According to an embodiment, the battery station management server10 may reproduce encryption to identify the information about the user having lost the battery, when the battery is lost. In this case, the user responsible for the battery loss may be easily identified. According to an embodiment, when the battery station management server 10 identifies a battery loss, the battery station management server 10 may make an immediate action of a related person possible by transmitting the battery loss information to the external electronic device. For example, when the battery station management server 10 transmits the battery loss information to the manager terminal, the manager terminal may identify the user having lost the battery and take an immediate contact action. In another example, when the battery station management server 10 transmits the battery return date elapse notification to the user terminal as the battery loss information, the user terminal may take an action of normally extending a battery use life or an action of returning the battery. In another example, when the battery station management server 10 transmits the battery loss information to a battery station, the battery station may accumulate the battery loss information and report the same to allow a manager to check the same at a glance later.

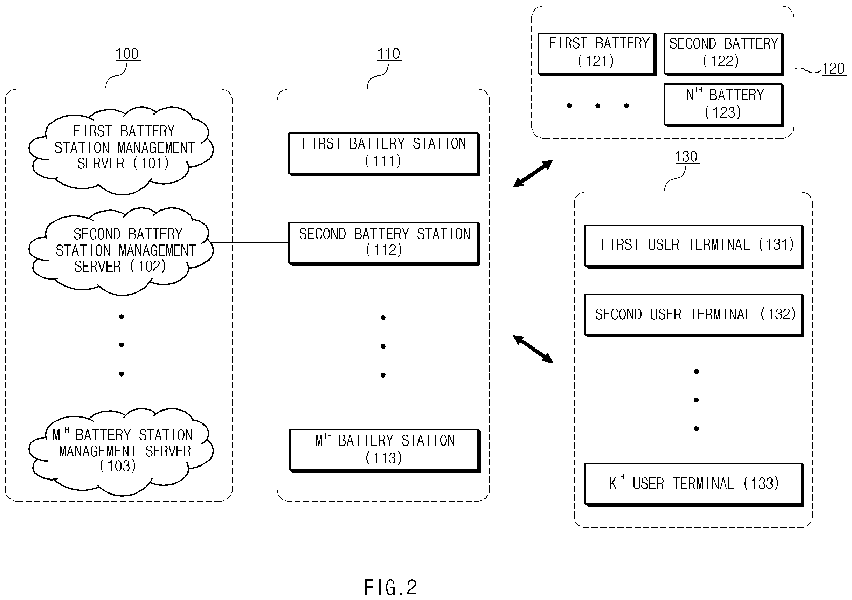

FIG. 2 shows a battery rental system according to an embodiment disclosed herein.

Referring to FIG. 2, the battery rental system may include a battery station management server 100, a battery station 110, and a user terminal 130. The battery station 110 may manage at least one battery 120.

Hereinbelow, the battery rental system including the battery station management server 100 will be described in detail with reference to FIG. 1. Redundant matters will be omitted or described in detail.

The battery station management server 100 may include a plurality of battery station management servers. The battery station management server 100 may include a first battery station management server 101, a second battery station management server 102, and an M^{th} battery station management server 103. Herein, M may include a natural number greater than or equal to 3.

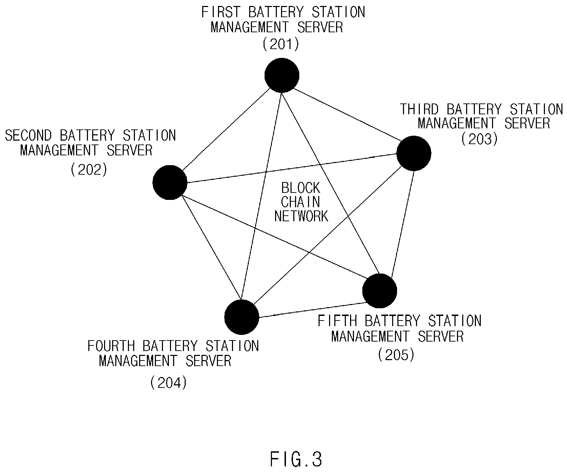

Each of the plurality of battery station management servers 101, 102, and 103 may be configured substantially identically to the battery station management server 10 of FIG. 1. The plurality of battery station management servers 101, 102, and 103 may store smart contracts of the same content. The plurality of battery station management servers 101, 102, and 103 may be connected through a block chain network by sharing the same smart contract. A connection relationship between the plurality of battery station management servers 100 will be described in detail with reference to FIG. 3.

The plurality of battery station management servers 100 may manage the battery station 110. The battery station management server 100 may be connected to the battery station 110 wiredly or wirelessly.

The battery station management server 100 may manage the battery rental information. The battery rental information may include battery information about a battery 120 managed by the battery station 110 connected to the battery station management server 100. The battery rental information may include user information about the user terminal 130 using the battery station 110 connected to the battery station management server 100. The battery information may include battery identification information and battery manufacturing company information, and the user information may include identification information of the user terminal.

The battery station management server 100 may determine whether the battery is lost. The battery station management server 100 may determine whether the battery is lost in a process where the user terminal 130 rents or returns the battery from or to the battery station 110. The battery station management server 100 may query the battery rental information to determine whether the battery is lost. When determining that the battery is lost, the battery station management server 100 may transmit the battery loss information to the external electronic device. For example, the external electronic device may include a user terminal, a battery station, or a manager terminal.

The battery station 110 may include a plurality of battery stations. The battery station 110 may include a first battery station 111, a second battery station 112, and an M^{th} battery station 113. The battery station 110 may manage at least one battery 120. The plurality of battery stations 111, 112, and 113 may manage the battery 120.

The battery 120 may include a plurality of batteries. The battery 120 may include a first battery 121, a second battery 122, and an N^{th} battery 123. According to an embodiment, the battery 120 may include an electric scooter battery, an electric bicycle battery, or a cell phone auxiliary battery. Herein, N may include a natural number greater than or equal to 3.

The user terminal 130 may be substantially the same as the user of FIG. 1. The user terminal 130 may include a plurality of user terminals. The user terminal 130 may include a first user terminal 131, a second user terminal 132, and a K^{th} user terminal 133. The user terminal 130 may include an electronic device such as a cell phone, a laptop computer, an electric vehicle, an electric scooter, an electric bicycle, etc. Herein, K may include a natural number greater than or equal to 3.

The user terminal 130 may interact with the battery station 110. The user terminal 130 may rent or return the battery 120 from or to the battery station 110. For example, the user may rent or return the battery 120 from or to the battery station 110 by using an application installed in the user terminal 130.

The user terminal 130 may generate a battery rental request. When the user terminal 130 rents the battery 120 from the battery station 110, the user terminal 130 may transmit the battery rental request to the battery station management server 100. Upon receiving the battery rental request, the battery station management server 100 may determine whether to approve battery rental in response to the battery rental request. When approving the battery rental request, the battery station management server 100 may perform management by generating, storing, or updating the battery rental information.

The user terminal 130 may generate the battery return request. According to an embodiment, the battery return request may mean a battery return request for a battery rented by the user terminal 130 from the battery station or another battery station. The battery station 110 may manage the returned battery. When the user terminal 130 returns the battery 120 to the battery station 110, the user terminal 130 may transmit the battery return request to the battery station management server 100. Upon receiving the battery return request, the battery station management server 100 may update the battery rental information.

FIG. 3 shows a connection relationship of a battery station management server according to an embodiment disclosed herein.

Referring to FIG. 3, a first battery station management server 201, a second battery station management server 202, third battery station management server 203, a fourth battery station management server 204, and a fifth battery station management server 205 may be connected through a block chain network. Each of the battery station management servers 201, 202, 203, 204, and 205 may be substantially the same as the battery station management server 10 of FIG. 1 or the battery station management server 100 of FIG. 2.

The battery station management servers 201, 202, 203, 204, and 205 connected to the block chain network may store smart contracts of the same content. According to an embodiment, the smart contract may be established by EOS, Ethereum, Ethereum Classic, Iota, NEO, Waves, Qtum, NEM, Multiversum, R3 Corda, R3 Corda Enterprise, Hyperledger, Ripple, or the Stellar platform. However, the smart contract is not limited to being established by a platform according to an embodiment disclosed herein.

Referring to FIG. 3, five battery station management servers connected through a block chain network are shown, but more or less battery station management servers may be connected to the block chain network without being limited thereto.

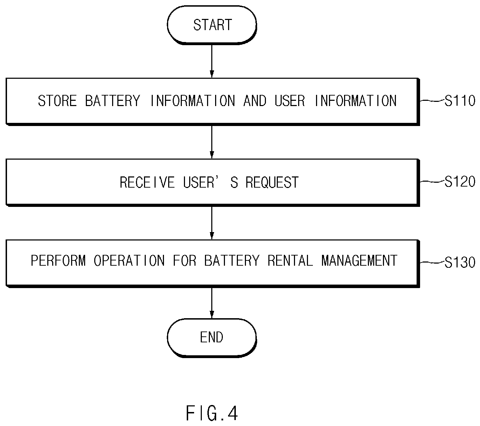

FIG. 4 is a view showing an operating method of a battery station management server, according to an embodiment disclosed herein.

Referring to FIG. 4, the operating method may include operation S110 of storing battery information and user information, operation S120 of receiving a user's request, and operation S130 of performing an operation for battery rental management.

Hereinbelow, the operating method of the battery station management server 10 will be described in detail with reference to FIGS. 1 to 3 and redundant matters may be omitted or described briefly.

In operation S110, the battery station management server 10 may store battery information and user information. The battery station management server 10 may perform operation S110 by using a smart contract. Operation S110 may be performed by the information management unit 16 of the battery station management server 10.

According to an embodiment, the battery station management server 10 may perform operation S110 before performing an operation regarding battery rental. According to another embodiment, the battery station management server 10 may perform operation S 110 each time when a new battery or a new user is registered.

The battery information may mean information about the battery 120 managed by the battery station 110, and the user information may mean information about the user or the user terminal 130 renting the battery 120 from the battery station 110 or returning the battery 120 to the battery station 110. According to an embodiment, the battery information may include battery identification information and battery manufacturing company information, and the user information may include user identification information. The battery information and the user information may correspond to encrypted information and correspond to information converted into a UUID form.

In operation S120, the battery station management server 10 may receive a user's request. Operation S120 may be performed by the communication unit 12 of the battery station management server 10. The user's request may include the battery rental request or the battery return request. The battery rental request may correspond to the battery rental request generated by the user terminal 130. The battery return request may correspond to the battery rental return request generated by the user terminal 130.

In operation S130, the battery station management server 10 may perform an operation for battery rental management. Operation S130 may be performed by the communication unit 12, the authentication unit 14, or the information management unit 16.

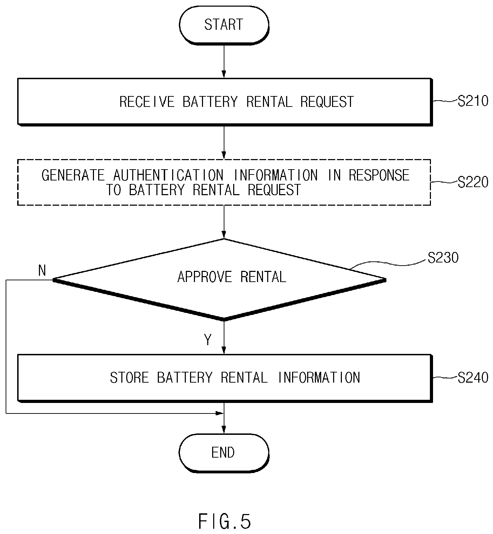

According to an embodiment, the battery station management server 10 may perform operation S130 after operation S120. According to another embodiment, the battery station management server 10 may perform operation S130 alone independently of operation S 110 or operation S120. A detailed operation performed by the battery station management server 10 in operation S130 will be described with reference to FIGS. 5 to 7.

FIG. 5 is a view showing an operating method of a battery station management server, according to an embodiment disclosed herein.

Referring to FIG. 5, the operating method of the battery station management server may include operation S210 of receiving the battery rental request, operation S230 of determining whether to approve the rental for the battery rental request, and/or operation S240 of storing the battery rental information. According to an embodiment, the operating method of the battery station management server may further include operation S220 of generating the authentication information in response to the battery rental request.

Hereinbelow, the operating method of the battery station management server 10 will be described in detail with reference to FIGS. 1 to 4 and redundant matters may be omitted or described briefly.

Operation S210 may correspond to an embodiment of operation S120 of FIG. 4. In operation S210, the battery station management server 10 may receive the battery rental request. Operation S210 may be performed by the communication unit 12 of the battery station management server 10.

Operations S220 to S240 may correspond to an embodiment of operation S130 of FIG. 4. Operations S220 and S230 may be performed by the authentication unit 14 of the battery station management server 10, and operation S240 may be performed by the information management unit 16 of the battery station management server 10.

In operation S230, the battery station management server 10 may determine whether to approve rental in response to the battery rental request. The battery station management server 10 may perform operation S230 based on form validation.

The battery station management server 10 may perform operation S220 before performing operation S230. In operation S220, the battery station management server 10 may generate authentication information for the battery rental request. According to an embodiment, the battery station management server 10 may generate a key pair of a PKI and generate a lender ID in operation S220.

The battery station management server 10 may store the authentication information generated in operation S220 by using a smart contract. According to an embodiment, the battery station management server 10 may store a public key and/or a lender ID.

When the battery station management server 10 generates the authentication information by performing operation S220, the battery station management server 10 may approve rental or non-rental based on the stored user information and the generated authentication information, in operation S230. The authentication information may include a public key and/or a lender ID.

When the battery station management server 10 approves rental for the battery rental request in operation S230, the battery station management server 10 may perform operation S240. In operation S240, the battery station management server 10 may store the battery rental information. The battery rental information may include the battery information and the user information. In this case, the battery information may mean information about a battery to be rented, and the user information may mean a subject renting the battery.

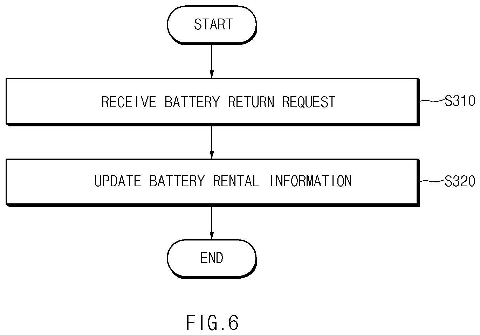

FIG. 6 is a view showing an operating method of a battery station management server, according to an embodiment disclosed herein.

Referring to FIG. 6, the operating method of the battery station management server may further include operation S310 of receiving the battery return request and operation S320 of updating the battery rental information.

Hereinbelow, the operating method of the battery station management server 10 will be described in detail with reference to FIGS. 1 to 5 and redundant matters may be omitted or described briefly.

Operation S310 may correspond to an embodiment of operation S120 of FIG. 4. In operation S310, the battery station management server 10 may receive the battery return request. According to an embodiment, the battery return request received by the battery station management server 10 in operation S310 may be generated by the user terminal 130. In this case, the battery return request may correspond to a normal processing request for battery return. Operation S310 may be performed by the communication unit 12 of the battery station management server 10.

Operation S320 may correspond to an embodiment of operation S130 of FIG. 4. Operation S320 may be performed by the information management unit 16 of the battery station management server 10.

In operation S320, the battery station management server 10 may update the battery rental information. Upon receiving the battery return request in operation S310, the battery station management server 10 may update the battery rental information by performing operation S320. In this case, the battery station management sever 10 may manage information indicating that the battery is normally returned, by updating the battery rental information.

The battery station management server 10 may perform operation S320 after performing operation S310, without being limited thereto. According to an embodiment, even without receiving the battery return request (i.e., without performing operation S310), the battery station management server 10 may update the battery rental information upon arrival of a preset period. The preset period may mean, but not limited to, a battery rental period.

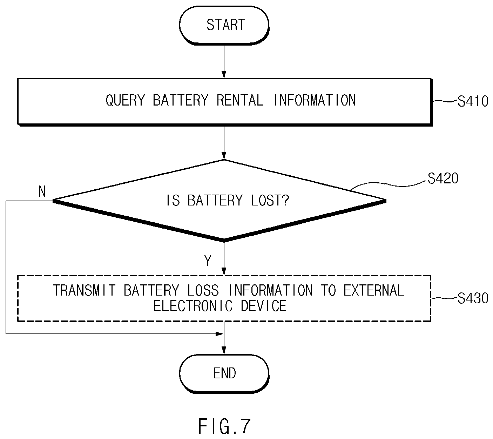

FIG. 7 is a view showing an operating method of a battery station management server, according to an embodiment disclosed herein.

Referring to FIG. 7, the operating method of the battery station management server may include operation S410 of querying the battery rental information and operation S420 of determining whether the battery is lost. According to an embodiment, the operating method of the battery station management server may further include operation S430 of transmitting the battery loss information to the external electronic device.

Hereinbelow, the operating method of the battery station management server 10 will be described in detail with reference to FIGS. 1 to 6 and redundant matters may be omitted or described briefly.

Operations S410 to S430 may correspond to an embodiment of operation S130 of FIG. 4. Operations S410 and S420 may be performed by the information management unit 16 of the battery station management server 10, and operation S430 may be performed by the communication unit 12 of the battery station management server 10.

In operation S410, the battery station management server 10 may query the battery rental information. By querying the battery rental information, the battery station management server 10 may identify battery information about a rented battery, whether a battery is being rent, whether a battery is normally returned, or information regarding battery rental including a subject renting a battery.

In operation S420, the battery station management server 10 may determine whether the battery is lost. The battery station management server 10 may perform operation S410 before operation S420 to determine whether the battery is lost. The battery station management server 10 may determine whether the battery is lost, by querying the battery rental information upon elapse of a preset period. The preset period may mean a battery rental period or a preset cycle, without being limited thereto.

When determining that the battery is lost in operation S420, the battery station management server 10 may update the battery rental information. The battery rental information may include information about a battery loss.

When determining that the battery is lost in operation S420, the battery station management server 10 may further perform operation S430. In operation S430, the battery station management server 10 may transmit the battery loss information to the external electronic device. The external electronic device may include the battery station 110, the user terminal 130, and/or a manager terminal. The battery loss information may include a battery loss notification, a battery return date elapse notification, or battery loss-identified date information. According to an embodiment, the battery station management server 10 may transmit the battery loss notification to the manager terminal, the battery loss-identified date information to the battery station 110, or the battery return date elapse notification to the user terminal 130.

Operations S410 to S430 correspond to an embodiment of operation S 130 of FIG. 4, and thus may be performed after operation S120 or performed alone independently of operation S110 or operation S120.

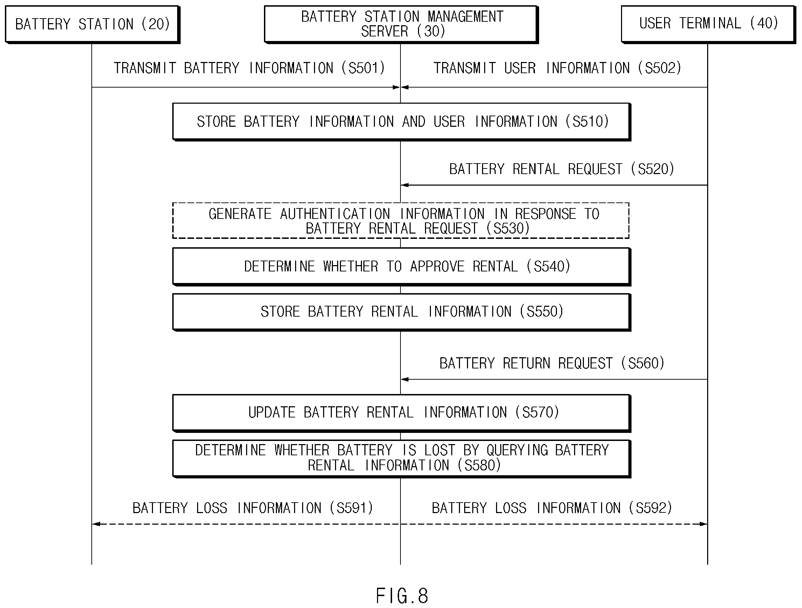

FIG. 8 is an operating flowchart of a battery rental system according to an embodiment disclosed herein.

Referring to FIG. 8, the battery rental system may include a battery station 20, a battery station management server 30, and a user terminal 40.

Hereinbelow, an operating flow of the battery station management server 30 in the battery rental system will be described in detail with reference to FIGS. 1 to 7 and redundant matters may be omitted or described briefly.

The battery station 20 may be substantially the same as the battery station 110 of FIG. 2, the battery station management server 30 may be substantially the same as the battery station management server 10 of FIG. 1 or the battery station management server 100 of FIG. 2, and the user terminal 40 may be substantially the same as the user terminal 130 of FIG. 2.

The battery station 20 may transmit battery information to the battery station management server 30, in operation S501. The battery station 20 may be connected to the battery station management server 30. The battery information may mean information about a battery managed by the battery station 20. The battery information according to an embodiment disclosed herein may include battery identification information and battery manufacturing company information. According to an embodiment, the battery information may be stored in the form of a UUID.

The user terminal 40 may transmit user information to the battery station management server 30. The user information may mean information about a user renting a battery from or returning a battery to the battery station 20, and may include user identification information according to an embodiment disclosed herein. According to an embodiment, the user information may be stored in the form of a UUID.

In operation S510, the battery station management server 30 may store the battery information and the user information, received in operations S501 and S502. The battery station management server 30 may perform operation S510 by using a smart contract. Operation S510 may be substantially the same as operation S110 of FIG. 4.

According to an embodiment, the battery station management server 30 may include a plurality of battery station management servers. According to an embodiment disclosed herein, when there are a plurality of battery station management servers, the plurality of battery station management servers may store smart contracts of the same matters and may be connected through a block chain network. In this case, the plurality of battery station management servers 30 may manage battery information received from the connected battery station 20 and/or user information received from the user terminal 40, together.

The user terminal 40 may generate the battery rental request and transmit the same to the battery station management server 30, in operation S520. In operation S520, the battery station management server 30 may receive the battery rental request. Operation S520 may be substantially the same as operation S210 of FIG. 5.

Upon receiving the battery rental request, the battery station management server 30 may determine whether to approve battery rental in operation S540. The battery station management server 30 may determine whether to approve the rental based on form validation. The battery station management server 30 may perform user authentication to determine whether to approve the rental for the battery rental request. According to an embodiment, user authentication may mean authentication of whether the user having requested battery rental is a registered user. According to an embodiment, when failing to perform user authentication in operation S540, the battery station management server 30 may perform operation S502. In this case, the user terminal 40 may generate new user information and transmit the same to the battery station management server 30, in operation S502. Operation S540 may be substantially the same as operation S230 of FIG. 5.

The battery station management server 30 may perform operation S530 before performing operation S540. In operation S530, the battery station management server 30 may generate authentication information for the battery rental request. The battery station management server 30 may generate a key pair of a PKI. According to an embodiment, the battery station management server 30 may generate a lender ID together. The authentication information may include a public key and/or a lender ID. According to an embodiment, the battery station management server 30 may store the authentication information generated in operation S530 by using the smart contract, and when there are a plurality of battery station management servers, the plurality of battery station management servers may manage the generated authentication information together. According to an embodiment, the battery station management server 30 may verify a signature with the public key. Operation S530 may be substantially the same as operation S220 of FIG. 5.

According to an embodiment disclosed herein, when the battery station management server 30 may perform operation S530, the battery station management server 30 may perform operation S540 based on user information and authentication information. According to an embodiment, the battery station management server 30 may perform user authentication and battery rental approval to approve rental or non-rental. According to an embodiment, user authentication may be performed based on the user information, and battery rental approval may be performed based on the authentication information.

In operation S550, the battery station management server 30 may store the battery rental information. According to an embodiment, the battery rental information may include information encrypted using the smart contract. According to an embodiment, the battery rental information may include battery rental state information. According to an embodiment, the battery rental state information may be indicated by a flag. According to an embodiment, when the authentication unit 14 approves battery rental, the information management unit 16 may indicate and store the flag indicating the battery rental state information as "T", "True", or "1". The battery rental information may include the battery information and the user information. The battery rental information may include the battery information and the user information stored in operation S510. In this case, the battery information may mean information about a battery to be rented, and the user information may mean information about a subject renting the battery. Operation S550 may be substantially the same as operation S240 of FIG. 5.

The user terminal 40 may generate the battery return request and transmit the same to the battery station management server 30, in operation S560. The battery return request may correspond to a normal processing request for battery return. In operation S560, the battery station management server 30 may receive the battery return request. Operation S560 may be substantially the same as operation S310 of FIG. 6.

Upon receiving the battery return request, the battery station management server 30 may update the battery rental information, in operation S570. The battery station management server 30 may manage information about whether the battery is normally returned, by updating the battery rental information in operation S570. According to an embodiment, by updating the battery rental information in response to the battery return request, the information management unit 16 may remove the flag indicating the battery rental state information or changing an indication into "F", "False", or "0". Operation S570 may be substantially the same as operation S320 of FIG. 6.

The battery station management server 30 may determine whether the battery is lost, by querying the battery rental information, in operation S580. The battery station management server 30 may query the battery rental information. By querying the battery rental information, the battery station management server 30 may identify battery information about a rented battery, whether a battery is being rent, whether a battery is normally returned, or information regarding battery rental including a subject renting a battery. The battery station management server 30 may determine whether the battery is lost, based on a result of querying the battery rental information. According to an embodiment, the battery station management server 30 may query the battery rental information and determine that the battery is lost when the battery rental state information is not removed or not changed. According to an embodiment, the battery station management server 30 may identify information about a user having lost the battery, by using the smart contract, when determining that the battery is lost. According to an embodiment, the battery station management server 30 may reproduce encryption for battery information of the lost battery and user information stored in the battery station management server 30, by using the smart contract. Herein, the battery station management server 30 may identify as the information about the user having lost the battery, user information used when encrypted information matches the battery rental information. Operation S580 may correspond to an embodiment of operation S420 of FIG. 7.

When determining that the battery is lost in operation S580, the battery station management server 30 may transmit the battery loss information to the external electronic device. According to an embodiment, the battery station management server 30 may transmit battery loss information to the battery station 20, in operation S591. According to another embodiment, the battery station management server 30 may transmit the battery loss information to the user terminal 40, in operation S492. Operations S591 and S592 may correspond to an embodiment of operation S430 of FIG. 7.

Terms such as "include", "constitute" or "have" described above may mean that the corresponding component may be inherent unless otherwise stated, and thus should be construed as further including other components rather than excluding other components. All terms including technical or scientific terms have the same meanings as those generally understood by those of ordinary skill in the art to which the embodiments disclosed herein pertain, unless defined otherwise. The terms used generally like terms defined in dictionaries should be interpreted as having meanings that are the same as the contextual meanings of the relevant technology and should not be interpreted as having ideal or excessively formal meanings unless they are clearly defined in the present document.

The above description is merely illustrative of the technical idea of the present disclosure, and various modifications and variations will be possible without departing from the essential characteristics of embodiments of the present disclosure by those of ordinary skill in the art to which the embodiments disclosed herein pertains. Therefore, the embodiments disclosed herein are intended for description rather than limitation of the technical spirit of the embodiments disclosed herein and the scope of the technical spirit of the present disclosure is not limited by these embodiments disclosed herein. The protection scope of the technical spirit disclosed herein should be interpreted by the following claims, and all technical spirits within the same range should be understood to be included in the range of the present document.

## Claims

1. A battery station management server comprising:
a communication unit configured to receive a battery rental request for a battery managed by a battery station of a user;
an authentication unit configured to determine whether to approve the battery rental request for a rental of the battery; and
an information management unit configured to store battery information about the battery and user information about a user by using a smart contract and manage battery rental information comprising the battery information and the user information by using the smart contract when approving the battery rental request.

2. The battery station management server of claim 1, wherein the battery information comprises battery identification information and battery manufacturing company information, and the user information comprises user identification information.

3. The battery station management server of claim 1, wherein the authentication unit is further configured to generate authentication information in response to the battery rental request, and determine whether to approve rental based on the user information and the authentication information.

4. The battery station management server of claim 1, wherein the authentication unit is further configured to determine whether to approve the rental for the battery rental request based on a form validation.

5. The battery station management server of claim 1, wherein the communication unit is further configured to further receive a battery return request of the user, and
wherein the information management unit is further configured to update the battery rental information by using the smart contract upon receiving the return request.

6. The battery station management server of claim 1, wherein the information management unit is further configured to determine whether the battery is lost, by querying the battery rental information.

7. The battery station management server of claim 6, wherein when the information management unit determines that the battery is lost, the communication unit is further configured to transmit battery loss information to an external electronic device.

8. A battery rental system comprising:
a battery station configured to manage at least one battery;
a user terminal configured to generate a battery rental request for renting the battery from the battery station; and
a battery station management server configured to determine whether to approve the battery rental request, store battery information about the battery managed by the battery station and user information about a user by using a smart contract and manage battery rental information comprising the battery information and the user information by using the smart contract when approving the battery rental request.

9. The battery rental system of claim 8, wherein the battery information comprises battery identification information and battery manufacturing company information, and the user information comprises identification information of the user terminal.

10. The battery rental system of claim 8, wherein the user terminal is further configured to transmit a battery return request to the battery station management server, and
wherein the battery station management server is further configured to update the battery rental information by using the smart contract upon receiving the return request.

11. The battery rental system of claim 8, wherein the battery station management server is further configured to determine whether the battery is lost, by querying the battery rental information.

12. The battery rental system of claim 11, wherein the battery station management server is further configured to transmit battery loss information to an external electronic device, upon determining that the battery is lost.

13. An operating method of a battery state management server, the operating method comprising:
storing battery information about a battery and user information about a user by using a smart contract;
receiving a battery rental request of a user;
determining whether to approve the battery rental request; and
managing battery rental information comprising the battery information by using the smart contract, when approving the battery rental request.

14. The operating method of claim 13, wherein the battery information comprises battery identification information and battery manufacturing company information, and the user information comprises user identification information.

15. The operating method of claim 13, wherein the determining of whether to approve rental for the battery rental request is performed based on form validation.
